# FASCICULE DE BREVET EUROPEEN

(11) **EP 3 859 473 B1**
(45) Date de publication et mention de la délivrance du brevet: **12.04.2023**
(21) Numéro de dépôt: 21154326.9
(22) Date de dépôt: 29.01.2021
(51) Int. Cl.: G05B 19/042, H04L 67/12, H04L 69/08

(54) **DISPOSITIF ÉLECTRONIQUE DE CALCUL ET DE DIFFUSION CENTRALISÉS D'ÉTAT(S) D'UN AÉRONEF, ENSEMBLE AVIONIQUE, PROCÉDÉ, ET PROGRAMME D'ORDINATEUR ASSOCIÉS**
ELEKTRONISCHES GERÄT ZUR ZENTRALISIERTEN BERECHNUNG UND VERBREITUNG DES JEWEILIGEN STATUS EINES FLUGZEUGS, ENSPRECHENDE AVIONIKEINHEIT, ENTSPRECHENDES VERFAHREN UND COMPUTERPROGRAMM
ELECTRONIC DEVICE FOR CALCULATING AND CENTRALISED DISTRIBUTION OF STATE(S) OF AN AIRCRAFT, ASSOCIATED AVIONICS ASSEMBLY, METHOD AND COMPUTER PROGRAM

(30) Priorité: 31.01.2020 FR 2000965
(43) Date de publication de la demande: 04.08.2021
(73) Titulaire: THALES, 92400 Courbevoie (FR)
(72) Inventeur: BELFY, Henri, 31036 TOULOUSE CEDEX 1 (FR); FLOTTE, Laurent, 31300 TOULOUSE (FR); MAROT, Frédéric, 31300 TOULOUSE (FR)
(74) Mandataire: Lavoix

(56) Documents cités:
- FR-A1- 3 014 575
- FR-A1- 3 073 966

## Description

La présente invention concerne un dispositif électronique de calcul et de diffusion centralisés d'état(s) d'un aéronef.

La présente invention concerne également un ensemble avionique comprenant au moins deux équipements électroniques reliés entre eux par un réseau avionique et/ou via une liaison directe.

La présente invention concerne également un procédé de calcul et de diffusion centralisés d'état(s) d'un aéronef, le procédé de calcul et de diffusion centralisés étant mis en oeuvre par un tel dispositif électronique de calcul et de diffusion centralisés d'état(s) d'un aéronef.

La présente invention concerne aussi un programme d'ordinateur comportant des instructions logicielles qui, lorsqu'elles sont exécutées par un ordinateur, mettent en oeuvre un tel procédé de calcul et de diffusion centralisés d'état(s) d'un aéronef.

La présente invention concerne la gestion de système(s) avionique(s) d'aéronef(s) pilotés ou télé opérés. Dans les aéronefs actuels (on entend par aéronefs des avions, des hélicoptères mais également drones), il est nécessaire pour de nombreux systèmes avioniques de déterminer un ou plusieurs état(s) d'aéronef.

Par la suite, par état(s) d'un aéronef on entend l'état d'équipement(s) avionique(s) (e.g. moteurs, actionneurs, systèmes hydrauliques) ou de capacités de l'aéronef (types d'approches, phase de vol, possible(s) par exemple).

Les systèmes avioniques pour lesquels il est nécessaire de déterminer un ou plusieurs état(s) d'aéronef sont notamment des systèmes avioniques configurés pour mettre en oeuvre au moins une fonction avionique et correspondent par exemple à un système de gestion de vol ou FMS (de l'anglais *Flight Management System*), à un système d'alerte de vol ou FWS (de l'anglais *Flight Warning System*), des systèmes de maintenance propres à configurer un système avionique de diagnostic embarqué en fonction de panne(s) détectée(s) notamment à partir d'un ou de plusieurs état(s) d'aéronef, et des systèmes synoptiques propres à afficher des schémas/pages synoptiques d'équipement(s) avionique(s) pour représenter par exemple les équipements avioniques dédiés au carburant, à la distribution électrique, hydraulique ou des capacités de l'aéronef en termes de trajectoires, approches, etc.

Classiquement, chacun des systèmes avioniques précités met en oeuvre indépendamment des autres systèmes avioniques précités son propre calcul interne du ou des état(s) d'aéronef dont il a besoin, cependant la structure de l'interface d'échange entre d'une part l'outil interne de calcul d'état(s) d'aéronef du système avionique considéré parmi les systèmes avioniques précités et d'autre part l'outil interne fonctionnel utilisateur du ou de ces état(s) d'aéronef est prédéfinie et figée ce qui rend complexe l'évolution du système avionique considéré.

A titre d'alternative, il existe une architecture centralisée dans laquelle l'ensemble des états d'aéronefs requis par les systèmes avioniques fonctionnels précités sont calculés par un ou des outil(s) de calcul d'état(s) d'aéronef, tel que notamment décrit au sein du brevet FR 3 014 575 au nom de la Demanderesse, indépendants des systèmes avioniques précités puis tous transmis directement aux systèmes avioniques en utilisant une interface d'échange entre d'une part le ou les outil(s) de calcul d'état(s) d'aéronef indépendants et d'autre part les systèmes avioniques précités. Cependant, la structure d'une telle interface d'échange d'architecture centralisée est également figée ce qui rend interdépendant les systèmes avioniques précités et le ou les outil(s) de calcul d'état(s) d'aéronef indépendants. Une telle interdépendance est problématique lorsqu'au moins deux systèmes avioniques distincts des système avioniques précités ne requièrent en commun qu'une partie de l'ensemble des états d'aéronefs transmis sur l'interface d'échange. En effet, en cas d'ajout d'un état d'aéronef dont le calcul est requis par l'un de ces deux systèmes avionique et pas par l'autre, l'autre est potentiellement impacté par le changement, en taille ou en ordre de transmission des états d'aéronefs, de la structure d'interface d'échange associée.

Le but de l'invention est alors de proposer un dispositif électronique et un procédé associé qui permettent d'améliorer la flexibilité de calcul et de diffusion d'état(s) d'aéronefs requis par un ou plusieurs systèmes avioniques fonctionnels.

A cet effet l'invention a pour objet un dispositif électronique de calcul et de diffusion centralisés d'état(s) d'un aéronef selon la revendication 1.

Le dispositif électronique de calcul et de diffusion centralisés d'état(s) d'un aéronef est alors propre à centraliser de manière indépendante le calcul de la valeur des états d'aéronefs requis par des dispositifs avioniques fonctionnels consommateurs auxquels il est relié via un réseau avionique de l'aéronef et/ou via une liaison directe, tout en opérant une transmission sur mesure du ou de ces états d'aéronef, un dispositif avionique consommateur ne recevant que le ou les états d'aéronefs dont il a besoin.

Suivant d'autres aspects avantageux de l'invention, le dispositif électronique de calcul et de diffusion centralisés d'état(s) d'un aéronef comprend une ou plusieurs des caractéristiques suivantes, prises isolément ou suivant toutes les combinaisons techniquement possibles :
- le dispositif électronique de calcul et de diffusion centralisés est propre à diffuser la liste d'état(s) d'aéronef :
   - au cours d'une phase d'initialisation du dispositif électronique de calcul et de diffusion centralisés, et/ou
   - au cours d'une phase d'initialisation d'au moins un des dispositifs avioniques consommateurs propre(s) à être relié(s) au dispositif électronique de calcul et de diffusion centralisés via le réseau avionique et/ou via une liaison directe, et/ou
   - sur requête d'au moins un des dispositifs avioniques consommateurs propre(s) à être relié(s) au dispositif électronique de calcul et de diffusion centralisés via le réseau avionique et/ou via une liaison directe, et/ou
   - via un fichier de configuration accessible par chaque dispositif avionique consommateur, et/ou
   - en cas de changement de valeur d'au moins un état de ladite liste d'états(s), et/ou
   - périodiquement ;
- la liste est configurable en nombre d'état(s) d'aéronef, et/ou en type d'état(s) de l'aéronef et/ou en information(s) représentative(s) dudit état d'aéronef ;
- la liste comprend, pour chaque état(s) d'aéronef :
   - un libellé invariant prédéterminé dudit état d'aéronef, le libellé étant connu de chaque dispositif avionique consommateur propre à consommer ledit état, et/ou
   - un identifiant dudit état d'aéronef variable d'une configuration courante à une configuration suivante de la liste ;
- le dispositif électronique de calcul et de diffusion centralisés est configuré pour transmettre audit au moins un dispositif avionique consommateur, uniquement la valeur ou les valeurs dudit au moins un état d'aéronef sélectionné, périodiquement et/ou en cas de changement de la ou des valeurs dudit au moins un état d'aéronef sélectionné.

L'invention a également pour objet un ensemble électronique comprenant au moins deux équipements électroniques reliés entre eux par un réseau avionique et/ou par une liaison directe, dans lequel au moins l'un des au moins deux équipements électroniques comporte un dispositif électronique de calcul et de diffusion centralisés du type précité, et dans lequel au moins l'un des au moins deux équipements électroniques comporte au moins un dispositif avionique consommateur d'au moins une valeur d'au moins un état dudit aéronef,
le dispositif électronique de calcul et de diffusion centralisés et ledit au moins un dispositif avionique consommateur communiquant l'un avec l'autre au moyen d'un protocole de communication selon lequel :
- le dispositif électronique de calcul et de diffusion centralisés utilise un motif de publication pour :
- diffuser la liste d'état(s) d'aéronef dont la valeur est propre à être accessible via le dispositif électronique de calcul et de diffusion centralisés, et
- transmettre, audit au moins un dispositif avionique consommateur, uniquement la valeur ou les valeurs dudit au moins un état d'aéronef sélectionné, et
- ledit au moins un dispositif avionique consommateur utilise un motif d'abonnement pour requérir du dispositif électronique de calcul et de diffusion centralisés la transmission d'une ou plusieurs valeurs d'au moins un premier état d'aéronef sélectionné au sein de la liste.

L'invention a également pour objet un procédé de calcul et de diffusion centralisés d'état(s) d'un aéronef le procédé de calcul et de diffusion centralisés étant mis en oeuvre par un dispositif électronique de calcul et de diffusion centralisés d'état(s) d'un aéronef, le procédé de calcul et de diffusion centralisés d'état(s) d'un aéronef comprenant les étapes suivantes :
- le calcul de la valeur d'un ou plusieurs état(s) d'aéronef distincts,
- la génération d'une liste d'état(s) d'aéronef dont la valeur est propre à être accessible via le dispositif électronique de calcul et de diffusion centralisés, la liste comprenant, pour chaque état(s) d'aéronef, au moins une information représentative dudit état d'aéronef,
- la diffusion de la liste à chaque dispositif avionique consommateur d'au moins une valeur d'au moins un état dudit aéronef, un dispositif avionique consommateur étant propre à être relié au dispositif électronique de calcul et de diffusion centralisés via un réseau avionique et/ou via une liaison directe,
- la réception d'au moins une requête de transmission d'une ou plusieurs valeurs d'au moins un premier état d'aéronef sélectionné au sein de la liste, la requête étant émise par au moins un dispositif avionique consommateur propre à être relié au dispositif électronique de calcul et de diffusion centralisés via le réseau avionique et/ou via une liaison directe, la requête comprenant ladite au moins une information représentative associée audit au moins un premier état d'aéronef sélectionné,
- la transmission, audit au moins un dispositif avionique consommateur, uniquement de la valeur ou des valeurs dudit au moins un premier état d'aéronef sélectionné.

Suivant d'autres aspects avantageux de l'invention, le procédé de calcul et de diffusion centralisés d'état(s) d'un aéronef comprend une ou plusieurs des caractéristiques suivantes, prises isolément ou suivant toutes les combinaisons techniquement possibles :
- en cas de réception d'une requête de transmission d'une ou plusieurs valeurs d'au moins un deuxième état d'aéronef sélectionné au sein de la liste, la requête étant émise par ledit au moins un dispositif avionique consommateur, ledit au moins un deuxième état d'aéronef sélectionné au sein de la liste étant distinct dudit au moins un premier état d'aéronef sélectionné au sein de la liste, la transmission, audit au moins un dispositif avionique consommateur, uniquement de la valeur ou des valeurs dudit au moins un premier état d'aéronef sélectionné est automatiquement interrompue et remplacée par la transmission, audit au moins un dispositif avionique consommateur, uniquement de la valeur ou des valeurs dudit au moins un deuxième état d'aéronef sélectionné ;
- en cas de réception d'au moins deux requêtes de transmission de la valeur ou des valeurs d'un même premier état d'aéronef, lesdites au moins deux requêtes étant émises respectivement par au moins deux dispositifs avioniques consommateurs distincts, la transmission comprend une mutualisation du transport de la valeur ou des valeurs du même premier état d'aéronef à destination desdits au moins deux dispositifs avioniques consommateurs distincts.

L'invention a également pour objet un programme d'ordinateur comportant des instructions logicielles qui, lorsqu'elles sont exécutées par un ordinateur, mettent en oeuvre un procédé de calcul et de diffusion centralisés d'état(s) d'un aéronef tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- **[****Fig 1****] [****Fig 2****] [****Fig 3****]** les figures 1 à 3 sont des représentations schématiques de trois variantes d'architecture d'ensemble électronique selon l'invention ;
- **[****Fig 4****]** la figure 4 est un organigramme d'un procédé de calcul et de diffusion centralisés d'état(s) d'un aéronef selon l'invention ;
- **[****Fig 5****]** la figure 5 est un chronogramme d'échanges entre un dispositif électronique de calcul et de diffusion centralisés d'état(s) d'un aéronef et un dispositif avionique consommateur.

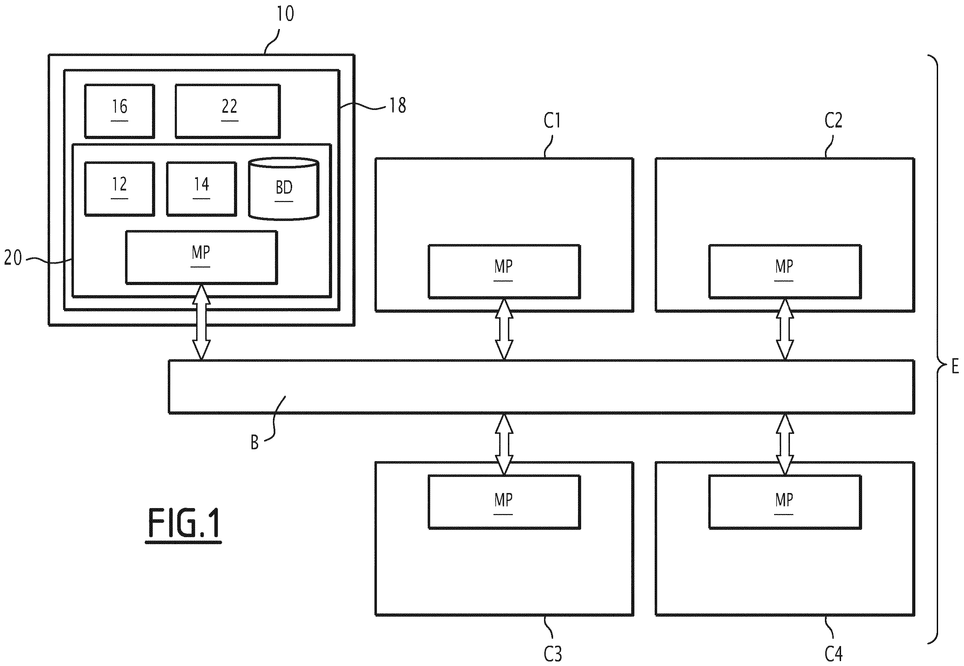

Sur la figure 1, un premier exemple d'architecture d'un ensemble électronique E selon la présente invention est représenté. Selon ce premier exemple, un tel ensemble électronique E comprend au moins deux équipements électroniques, à savoir ici cinq équipements électroniques 10, C1, C2, C3 et C4 reliés entre eux par un réseau avionique, notamment via un bus avionique B, notamment de type AFDX (de l'anglais Avionics Full DupleX switched ethernet) par exemple ARINC 664, ARINC 429, etc.

Plus précisément, l'ensemble électronique E comprend parmi les cinq équipements électroniques 10, C1, C2, C3 et C4, un dispositif électronique 10 de calcul et de diffusion centralisés d'état(s) d'un aéronef et quatre dispositifs avioniques consommateurs C1, C2, C3 et C4, chacun propres à consommer en temps réel au moins un état de l'aéronef. Le dispositif avionique consommateur C1 est par exemple, un système d'alerte de vol ou FWS (de l'anglais *Flight Warning System).* Le dispositif avionique consommateur C2 est par exemple un système ou un ensemble de systèmes synoptiques propres à afficher des schémas/pages synoptiques d'équipement(s) avionique(s) pour représenter par exemple les équipements avioniques dédiés au carburant, à la distribution électrique, hydraulique ou des capacités de l'aéronef en termes de trajectoires, approches, etc. Le dispositif avionique consommateur C3 est par exemple un système de gestion de vol ou FMS (de l'anglais *Flight Management System).* Le dispositif avionique consommateur C4 est par exemple un système (ou un ensemble de systèmes) de maintenance propre à configurer un système avionique de diagnostic embarqué en fonction de panne(s) détectée(s) notamment à partir d'un ou de plusieurs état(s) d'aéronef. Chacun des quatre dispositifs avioniques consommateurs C1, C2, C3 et C4 comprend au moins un émetteur/récepteur non représenté.

Le dispositif électronique 10 de calcul et de diffusion centralisés d'état(s) d'un aéronef selon la présente invention est configuré pour au moins :
- calculer la valeur d'un ou plusieurs état(s) d'aéronef distincts,
- générer une liste d'état(s) d'aéronef dont la valeur est propre à être accessible via le dispositif électronique de calcul et de diffusion centralisés, la liste comprenant, pour chaque état(s) d'aéronef, au moins une information représentative dudit état d'aéronef,
- diffuser la liste à chaque dispositif avionique consommateur C1, C2, C3 et C4 d'au moins une valeur d'au moins un état dudit aéronef,
- recevoir, d'au moins un dispositif avionique consommateur, au moins une requête de transmission d'une ou plusieurs valeurs d'au moins un premier état d'aéronef sélectionné au sein de la liste, la requête comprenant ladite au moins une information représentative associée audit au moins un premier état d'aéronef sélectionné,
- transmettre, audit au moins un dispositif avionique consommateur, uniquement la valeur ou les valeurs dudit au moins un état d'aéronef sélectionné.

Le dispositif électronique 10 de calcul et de diffusion centralisés d'état(s) d'un aéronef illustré sur la figure 1, est selon une première variante un équipement électronique indépendant, ou selon une deuxième variante, non représentée, par exemple, intégré au sein d'un équipement électronique de gestion d'entrée/sortie (I/O de l'anglais *Input* /*Output)* comme par exemple un équipement IOM (de l'anglais *Input*/*ouput Module*) en charge de la concentration et de la conversion de données (pour passer par exemple d'un bus ARINC 429 vers un bus ARINC 664 ou bien convertir des données analogiques en données numériques).

Un tel dispositif électronique 10 de calcul et de diffusion centralisés d'état(s) d'un aéronef comprend un module 12 de calcul de la valeur d'un ou plusieurs état(s) d'aéronef distincts. Un tel module de calcul 12 est, selon une première variante non représentée, obtenu à partir d'une spécification formelle propre à générer un code de calcul automatique, par exemple issue de l'environnement commercial SCADE (de l'anglais *Safety-Critical Application Development Environment*) ou encore de l'environnement de modélisation graphique Simulink. Selon une deuxième variante illustrée par la figure 1, un tel module de calcul 12 comprend un moteur de logiques configurables interprétant une base BD de données logiques, embarquée/intégrée directement au sein du dispositif électronique 10 et/ou issue d'un chargement externe. Quelle que soit la variante, le module de calcul 12 est associé à une chaîne outillée, non représentée, permettant d'obtenir les éléments propres à la variante mise en oeuvre, à savoir, respectivement, la spécification formelle ou la base de données BD précitée.

De plus, le dispositif électronique 10 de calcul et de diffusion centralisés d'état(s) d'un aéronef comprend un module 14 de génération de la liste d'état(s) d'aéronef (également appelé dictionnaire d'état(s) d'aéronef) dont la valeur est propre à être accessible via le dispositif électronique de calcul et de diffusion centralisés, la liste comprenant, pour chaque état(s) d'aéronef, au moins une information représentative dudit état d'aéronef.

Avantageusement, selon la présente invention, la liste est configurable en nombre d'état(s) d'aéronef, et/ou en type d'état(s) de l'aéronef et/ou en information(s) représentative(s) dudit état d'aéronef.

En complément facultatif, la liste comprend, pour chaque état(s) d'aéronef :
- un libellé invariant prédéterminé dudit état d'aéronef, le libellé étant connu de chaque dispositif avionique consommateur propre à consommer ledit état, et/ou
- un identifiant dudit état d'aéronef variable d'une configuration courante à une configuration suivante de la liste.

Par exemple, pour une configuration courante de l'aéronef, il est nécessaire de connaître pour au moins un des quatre dispositifs avioniques consommateurs C1, C2, C3 et C4 l'état d'une première et d'une deuxième pompes à fuel ainsi que l'état d'une première et d'une deuxième pompes de système hydraulique. Le Libellé invariant de l'état de la première pompe à fuel est par exemple FUEL_PMP1, le libellé invariant de l'état de la deuxième pompe à fuel est par exemple FUEL_PMP2, le libellé invariant de l'état de la première pompe hydraulique est par exemple HYD_PMP1, le libellé de l'état de la deuxième pompe hydraulique est par exemple HYD_PMP2.

Lorsque le module de calcul 12 est, selon une première variante non représentée, obtenu à partir d'une spécification formelle propre à générer un code de calcul automatique, chaque libellé est intégré directement, lors d'une phase de configuration préalable, dans ce code de calcul, et lorsque selon une deuxième variante illustrée par la figure 1, le module de calcul 12 comprend un moteur de logiques configurables interprétant une base BD de données logiques, un tel libellé est intégré, lors d'une phase de configuration préalable, au sein de la base de données logiques BD. Chaque libellé intégré au sein du module de calcul 12 est extrait par le module 14 pour générer la liste d'état(s) d'aéronef.

Le dispositif avionique consommateur C1 ayant, par exemple, besoin de connaître en temps réel ces quatre états distincts de première et deuxième pompes à fuel et de première et deuxième pompes hydraulique est configuré au préalable pour connaître les libellés invariants associés à chacun de ces états.

Selon une variante préférentielle permettant notamment d'accélérer, de sécuriser et d'optimiser les traitements logiciels, le module 14 de génération de la liste d'état(s) d'aéronef, est configuré pour associer au sein de la liste chaque libellé invariant d'un état à un identifiant qu'il affecte à ce même état, l'identifiant étant variable d'une configuration courante à une configuration suivante de la liste.

Par exemple, le module 14 de génération de la liste d'état(s) associe :
- l'identifiant 1001 au libellé FUEL_PMP1 de la première pompe à fuel,
- l'identifiant 1002 au libellé FUEL_PMP2 de la deuxième pompe à fuel,
- l'identifiant 2001 au libellé HYD_PMP1 de la première pompe hydraulique,
- l'identifiant 2002 au libellé HYD_PMP2 de la deuxième pompe hydraulique.

La liste résultante correspond alors par exemple à la liste L de couples unique d'informations représentatives d'états d'aéronef suivante :
L = {[FUEL_PMP1 ; 1001]; [FUEL_PMP2 ; 1002]; [HYD_PMP1 ; 2001] ; [HYD_PMP2 ; 2002]}.

Selon une autre variante, l'identifiant correspond uniquement à la position du libellé dans la liste L, par exemple si L = {FUEL_PMP1 ; FUEL_PMP2 ; HYD_PMP1 ; HYD_PMP2}, l'identifiant de l'état de la deuxième pompe à fuel est le numéro 2, tandis que celui de la deuxième pompe hydraulique est le numéro 4.

Selon encore une autre variante, le libellé invariant est suffisant et aucun identifiant associé n'est requis selon la présente invention.

Une fois la liste générée selon une configuration courante, le dispositif électronique 10 de calcul et de diffusion centralisés d'état(s) d'un aéronef est propre à diffuser la liste à chaque dispositif avionique consommateur C1, C2, C3 et C4 et comprend pour ce faire un module d'émission/réception 16.

Au sein de l'ensemble électronique E, le dispositif électronique 10 de calcul et de diffusion centralisés d'état(s) d'un aéronef et chaque dispositif avionique consommateur C1, C2, C3 et C4 communiquent ensemble en utilisant un protocole de communication prédéterminé appliqué par un module protocolaire MP de formatage selon ce protocole. Par exemple, il s'agit d'un protocole de publication-souscription (de l'anglais *Publish-Subscribe*) tel que décrit au sein des brevets FR 3 073 966 et FR 3 074 007 au nom de la Demanderesse.

Plus précisément, le dispositif électronique 10 de calcul et de diffusion centralisés d'état(s) d'un aéronef utilise un motif de publication, généré par le module protocolaire MP, pour diffuser, au moyen du module d'émission/réception 16, la liste L d'état(s) d'aéronef dont la valeur est propre à être accessible via le dispositif électronique de calcul et de diffusion centralisés 10.

Selon un aspect complémentaire facultatif, le module protocolaire MP est propre à morceler, en paquets de données, les informations de la liste L d'état(s) d'aéronef transmises au sein du motif de publication, et/ou à ajouter une couche de transport de manière à sécuriser la bonne réception des données par les différents dispositifs avioniques consommateurs C1, C2, C3 et C4.

En complément facultatif, le module d'émission/réception 16 du dispositif électronique 10 de calcul et de diffusion centralisés d'état(s) d'un aéronef est propre à diffuser la liste d'état(s) d'aéronef :
- au cours d'une phase d'initialisation du dispositif électronique de calcul et de diffusion centralisés, et/ou
- au cours d'une phase d'initialisation d'au moins un dispositif avionique consommateur relié au dispositif électronique de calcul et de diffusion centralisés via le réseau avionique et/ou via une liaison directe, et/ou
- sur requête d'au moins un dispositif avionique consommateur relié au dispositif électronique de calcul et de diffusion centralisés via le réseau avionique et/ou via une liaison directe, et/ou
- via un fichier de configuration accessible par chaque dispositif avionique consommateur, et/ou
- en cas de changement de valeur d'au moins un état de ladite liste d'états(s), et/ou
- périodiquement.

Par exemple, lorsque selon une première variante, chaque dispositif avionique consommateur est propre à requérir la liste d'état(s) d'aéronef, il n'est pas nécessaire que le dispositif électronique 10 de calcul et de diffusion centralisés d'état(s) d'un aéronef, producteur (i.e. générateur) de la liste, diffuse ladite liste lors de son initialisation.

Selon une deuxième variante, lorsqu'au moins un ou l'ensemble des dispositifs avioniques consommateurs n'est pas apte à requérir la liste d'état(s) d'aéronef, la liste est alors disponible dans un fichier de configuration accessible par le ou les dispositifs avioniques consommateur inaptes à la requérir, et/ou diffusée à l'initialisation du dispositif 10 de calcul et de diffusion centralisés d'état(s) d'un aéronef l'ayant produite. La diffusion à l'initialisation du dispositif 10 de calcul et de diffusion centralisés d'état(s) d'un aéronef permet notamment de profiter d'une phase transitoire de l'aéronef durant laquelle il est acceptable d'un point de vue opérationnel d'échanger un volume de données important et de consacrer une part importante des ressources matérielles à leur traitement mais suppose que le ou les dispositifs avioniques consommateurs C1 à C4 soient prêts à recevoir ladite liste, ce qui peut être vérifié par le dispositif 10 de calcul et de diffusion centralisés d'état(s) d'un aéronef en surveillant la valeur d'un bit de vie, émis par chaque dispositifs avioniques consommateurs C1 à C4, (ou à l'inverse émis par dispositif 10 de calcul et de diffusion centralisés d'état(s) d'un aéronef et surveillé par le ou les dispositifs consommateurs). Lorsque la valeur de bit de vie d'un dispositif avionique consommateur indique que celui-ci n'est pas prêt à recevoir la liste, une réinitialisation du dispositif 10 de calcul et de diffusion centralisés d'état(s) d'un aéronef est mise en oeuvre pour diffuser la liste d'état(s) d'aéronef dès que la valeur de bit de vie est modifiée pour indiquer que le dispositif avionique consommateur est disponible pour recevoir ladite liste d'état(s) d'aéronef.

Selon une troisième et une quatrième variante respectivement, la liste d'état(s) d'aéronef est diffusée par le module d'émission/réception 16 du dispositif électronique 10 de calcul et de diffusion centralisés d'état(s) d'un aéronef respectivement en cas de changement de valeur d'au moins un état de ladite liste d'états(s) ou périodiquement.

Chaque dispositif avionique consommateur C1, C2, C3 ou C4 recevant la liste d'état(s) d'aéronef, est propre, lorsqu'un identifiant est associé à un libellé d'état au sein de la liste, à extraire les identifiants des états d'aéronef dont ils ont besoin.

Autrement dit, après publication de la liste L = {[FUEL_PMP1 ; 1001]; [FUEL_PMP2 ; 1002]; [HYD_PMP1 ; 2001] ; [HYD_PMP2 ; 2002]} par le module d'émission/réception 16 du dispositif électronique 10 de calcul et de diffusion centralisés d'état(s) d'un aéronef, le dispositif avionique consommateur C1, par exemple, qui a besoin de la valeur de ces quatre états pour fonctionner mémorise au sein d'une mémoire non représentée les identifiants que le dispositif électronique 10 de calcul et de diffusion centralisés d'état(s) d'un aéronef leur a associé au sein de la configuration courante. Plus précisément, le dispositif avionique consommateur C1 qui ne connaissait au préalable que les libellés FUEL_PMP1 ; FUEL_PMP2 ; HYD_PMP1 ; HYD_PMP2 leur associe respectivement les identifiants 1001, 1002, 2001 et 2002.

En variante, si la liste L est telle que L = {FUEL_PMP1 ; FUEL_PMP2 ; HYD_PMP1 ; HYD_PMP2}, le dispositif avionique consommateur C1 qui ne connaissait au préalable que les libellés FUEL_PMP1 ; FUEL_PMP2 ; HYD_PMP1 ; HYD_PMP2 leur associe respectivement les identifiants 1, 2, 3 et 4 correspondant à leur position dans la liste.

De même si la liste L est telle que L = {HYD_PMP1 ; HYD_PMP2 ; FUEL_PMP1 ; FUEL_PMP2}, le dispositif avionique consommateur C1 qui ne connaissait au préalable que les libellés FUEL_PMP1 ; FUEL_PMP2 ; HYD_PMP1 ; HYD_PMP2 leur associe respectivement les identifiants 3, 4, 1 et 2 correspondant à leur position dans la liste.

A réception de la liste L par chaque dispositif avionique consommateur C1, C2, C3 ou C4, un mode opérationnel de l'ensemble électronique E est activé (i.e. le dispositif électronique 10 de calcul et de diffusion centralisés d'état(s) d'un aéronef et les dispositifs avioniques consommateurs C1, C2, C3 ou C4 sont propre à passer en mode opérationnel).

En mode opérationnel, le module de calcul 12 de la valeur d'un ou plusieurs état(s) d'aéronef distincts calcule en permanence l'état de différents d'équipement(s) avionique(s) (e.g. moteurs, actionneurs, systèmes hydrauliques) ou de capacités de l'aéronef (types d'approches, phase de vol, possible(s) par exemple) en utilisant un outil de traitement de logiques non représenté.

Le module d'émission/réception 16 du dispositif électronique 10 de calcul et de diffusion centralisés d'état(s) d'un aéronef est par alors configuré pour recevoir, d'au moins un dispositif avionique consommateur C1, C2, C3 ou C4, au moins une requête de transmission d'une ou plusieurs valeurs d'au moins un premier état d'aéronef sélectionné au sein de la liste, la requête comprenant ladite au moins une information représentative associée audit au moins un premier état d'aéronef sélectionné.

En complément facultatif, ledit au moins un dispositif avionique consommateur C1, C2, C3 ou C4, utilise un motif d'abonnement (i.e. de souscription), généré par son propre module protocolaire MP, pour requérir du dispositif 10 électronique de calcul et de diffusion centralisés d'état(s) d'un aéronef la transmission d'une ou plusieurs valeurs d'au moins un premier état d'aéronef sélectionné au sein de la liste. Le module protocolaire MP du dispositif 10 électronique de calcul et de diffusion centralisés.

Plus précisément, le dispositif avionique consommateur C1, par exemple, a besoin de la valeur de l'état de la première et deuxième pompes à fuel et de l'état de la première et deuxième pompes hydrauliques pour fonctionner et requiert en utilisant notamment un motif d'abonnement la transmission de leur valeur périodiquement et/ou en cas de changement de valeur, le motif d'abonnement comprenant une information représentative associée audit au moins un premier état d'aéronef sélectionné.

Selon une première variante, l'information représentative insérée dans la requête d'abonnement correspond à l'identifiant associé au libellé invariant dans la liste L = {[FUEL_PMP1 ; 1001]; [FUEL_PMP2 ; 1002]; [HYD_PMP1 ; 2001] ; [HYD_PMP2 ; 2002]}, par exemple, l'identifiant 1001 pour signifier au dispositif électronique 10 de calcul et de diffusion centralisés d'état(s) d'un aéronef que le dispositif avionique consommateur C1 souhaite s'abonner à la valeur d'état de la première pompe à fuel.

Selon une deuxième variante, l'information représentative insérée dans la requête d'abonnement correspond à l'identifiant associé au libellé invariant dans la liste L = {FUEL_PMP1 ; FUEL_PMP2 ; HYD_PMP1 ; HYD_PMP2}, par exemple, l'identifiant 1 de position dans la liste pour signifier au dispositif électronique 10 de calcul et de diffusion centralisés d'état(s) d'un aéronef que le dispositif avionique consommateur C1 souhaite s'abonner à la valeur d'état de la première pompe à fuel.

Selon une troisième variante, l'information représentative insérée dans la requête d'abonnement correspond à l'identifiant associé au libellé invariant dans la liste L = {HYD_PMP1 ; HYD_PMP2 ; FUEL_PMP1 ; FUEL_PMP2}, par exemple, l'identifiant 3 de position dans la liste pour signifier au dispositif électronique 10 de calcul et de diffusion centralisés d'état(s) d'un aéronef que le dispositif avionique consommateur C1 souhaite s'abonner à la valeur d'état de la première pompe à fuel.

Selon une quatrième variante ne requérant pas d'identifiant, l'information représentative insérée dans la requête d'abonnement correspond directement au libellé invariant FUEL_PMP1 de la première pompe à fuel.

Ainsi, selon la présente invention, en fonction de leurs besoins, les différents dispositifs avioniques consommateurs C1, C2, C3 et C4 s'abonnent à l'état des équipement(s) avionique(s) ou à l'état des capacités de l'aéronef qui les intéressent à un instant courant. Par exemple, le dispositif avionique consommateur C2 correspondant à un système ou un ensemble de systèmes synoptiques propres à afficher des schémas/pages synoptiques d'équipement(s) avionique(s), lorsqu'il présente une page liée au système fuel, s'abonne à toutes les données liées à l'état des systèmes fuel, et lorsqu'il présente une page liée au système hydraulique, se désabonne des données du système fuel et s'abonne à celles du système hydraulique. Selon un aspect particulier, le désabonnement, par exemple des valeurs d'états du système fuel, est automatique lors de l'abonnement à de nouveaux états, par exemple ceux du système hydraulique.

Un tel abonnement sur mesure permet à la fois de limiter la bande passante consommée en ajustant le volume de données nécessaires au strict besoin, et de limiter le temps de calcul nécessaire en ne traitant que les données nécessaires à la fonction requise à l'instant courant.

Le module d'émission/réception 16 du dispositif électronique 10 de calcul et de diffusion centralisés d'état(s) d'un aéronef est par ailleurs configuré pour transmettre, audit au moins un dispositif avionique consommateur dont il a reçu la requête, uniquement la valeur ou les valeurs dudit au moins un état d'aéronef sélectionné.

En complément facultatif, selon l'exemple de la figure 1, le module d'émission/réception 16 du dispositif électronique 10 de calcul et de diffusion centralisés d'état(s) d'un aéronef utilise également un motif de publication généré par le module protocolaire MP pour transmettre, audit au moins un dispositif avionique consommateur, uniquement la valeur ou les valeurs dudit au moins un état d'aéronef sélectionné.

Ainsi, le module protocolaire MP commun (i.e. intégré respectivement au sein de) au dispositif 10 électronique de calcul et de diffusion centralisés d'état(s) d'un aéronef et aux dispositifs avioniques consommateurs C1, C2, C3 et C4 est propre à générer et à traiter deux motifs de communication distincts à savoir un motif de publication et un motif d'abonnement.

En complément facultatif, le module d'émission/réception 16 du dispositif électronique 10 de calcul et de diffusion centralisés d'état(s) d'un aéronef est configuré pour transmettre audit au moins un dispositif avionique consommateur C1, C2, C3 ou C4, uniquement la valeur ou les valeurs dudit au moins un état d'aéronef sélectionné, périodiquement et/ou en cas de changement de la ou des valeurs dudit au moins un état d'aéronef sélectionné.

Avantageusement, lorsque l'un des dispositifs avioniques consommateurs C1, C2, C3 ou C4 a besoin d'une valeur d'état absent de la liste L d'état(s) d'aéronef de la configuration courante, selon un aspect complémentaire facultatif de la présente invention le dispositif électronique 10 de calcul et de diffusion centralisés d'état(s) d'un aéronef, et/ou le dispositif avionique consommateur concerné par un tel besoin, est ou sont respectivement reconfigurables. En particulier, le module de calcul 12 (notamment par modification de la spécification formelle ou de la base de données logiques BD à partir duquel il est issu) et le module 14 de génération de liste du dispositif électronique 10 de calcul et de diffusion centralisés d'état(s) d'un aéronef sont reconfigurables pour calculer et modifier la liste L d'état(s) d'aéronef afin d'intégrer un état supplémentaire dans une configuration suivante, par exemple, avec le libellé invariant HYD_PMP3, l'état d'une troisième pompe hydraulique requis uniquement par le dispositif avionique consommateur C1 et non par les dispositifs avioniques consommateurs C2, C3 ou C4.

Par rapport à la configuration courante CP où par exemple liste L_{CP} d'état(s) d'aéronef est telle que L_{CP} = {[FUEL_PMP1 ; 1001]; [FUEL_PMP2 ; 1002]; [HYD_PMP1 ; 2001] ; [HYD_PMP2 ; 2002]}, la liste L_{CS} modifiée pour la configuration suivante CS est par exemple L_{CS} = {[FUEL_PMP1 ; 6001]; [FUEL_PMP2 ; 6002]; [HYD_PMP1 ; 7001] ; [HYD_PMP2 ; 7002]; [HYD_PMP3 ; 7003]}.

En cohérence, le dispositif avionique consommateur C1 est reconfiguré pour connaître au préalable le libellé invariant HYD_PMP3 alloué à l'état de la troisième pompe hydraulique.

Les autres dispositifs avioniques consommateurs C2, C3 ou C4 n'utilisant pas la nouvelle donnée HYD_PMP3 ne sont pas concernés par cette reconfiguration, et selon les variantes de réalisation mettant en oeuvre un identifiant associé à un libellé, seul le dispositif électronique 10 de calcul et de diffusion centralisés d'état(s) d'un aéronef est configuré pour générer l'identifiant respectivement associé à chaque libellé invariant, un identifiant étant propre à varier d'une configuration courante CP à une configuration suivante CS, par exemple 1001 pour le libellé FUEL_PMP1 de la première pompe à fuel de la configuration courante CP, et 6001 pour ce même libellé dans la configuration suivante CS de liste L_{CS}.

Comme indiqué précédemment, après reconfiguration, le dispositif électronique 10 de calcul et de diffusion centralisés d'état(s) d'un aéronef diffuse la nouvelle liste L_{CS}, telle que par exemple L_{CS} = {[FUEL_PMP1 ; 6001]; [FUEL_PMP2 ; 6002]; [HYD_PMP1 ; 7001] ; [HYD_PMP2 ; 7002]; [HYD_PMP3 ; 7003]} où les identifiants sont complètement différents de la configuration précédente sans que cela n'impacte les dispositifs avioniques consommateurs configurés pour réassocier ces nouveaux identifiants aux libellés invariants les associations [Identification Fonctionnelle, Identifiant] lors de leurs initialisation, et pour s'abonner aux états d'aéronefs qui les intéresse.

Seul le dispositif avionique consommateur C1 impacté (i.e. ayant besoin pour son fonctionnement) par l'état ajouté, par exemple l'état de la troisième pompe hydraulique, s'y abonnera. Les dispositifs avioniques consommateurs C2, C3 ou C4 non modifiés sont propres à recevoir leurs valeur d'état comme à la configuration précédente, et ne sont pas impactés par les changements opérés au niveau du dispositif électronique 10 de calcul et de diffusion centralisés d'état(s) d'un aéronef.

Dans l'exemple de la figure 1, le dispositif 10 électronique de calcul et de diffusion centralisés d'état(s) d'un aéronef comporte une unité de traitement d'informations 18, formée par exemple d'une mémoire 20 associée à un processeur 22 tel qu'un processeur de type CPU (de l'anglais *Central Processing Unit*).

Dans l'exemple de la figure 1, le module 12 de calcul de la valeur d'un ou plusieurs état(s) d'aéronef distincts et le module 14 de génération de la liste L d'état(s) d'aéronef sont réalisés chacun sous forme d'un logiciel exécutable par le processeur 22.

La mémoire 20 de l'unité de traitement d'informations 18 est alors apte à stocker un logiciel de calcul configuré pour calculer la valeur d'un ou plusieurs état(s) d'aéronef distincts, et un logiciel de génération configuré pour générer la liste d'état(s) d'aéronef.

Le processeur 22 est alors apte à exécuter, le logiciel de calcul et le logiciel de génération de la liste L d'état(s) d'aéronef.

En variante non représentée, le module 12 de calcul de la valeur d'un ou plusieurs état(s) d'aéronef distincts et le module 14 de génération de la liste L d'état(s) d'aéronef sont réalisés chacun sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Spécifie Integrated Circuit*).

Lorsqu'au moins une partie du dispositif électronique 10 de calcul et de diffusion centralisés d'état(s) d'un aéronef est réalisée sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

De la même manière, chaque dispositif avionique consommateur est propre à contenir une unité de traitement d'informations, formée par exemple d'une mémoire associée à un processeur, non représentés.

Le dispositif électronique 10 de calcul et de diffusion centralisés d'état(s) d'un aéronef est préférentiellement destiné à être embarqué à bord de l'aéronef. A titre d'alternative, le dispositif électronique 10 de calcul et de diffusion centralisés d'état(s) d'un aéronef est « désembarqué » et distant de l'aéronef avec lequel il communique à distance selon une liaison sans fil.

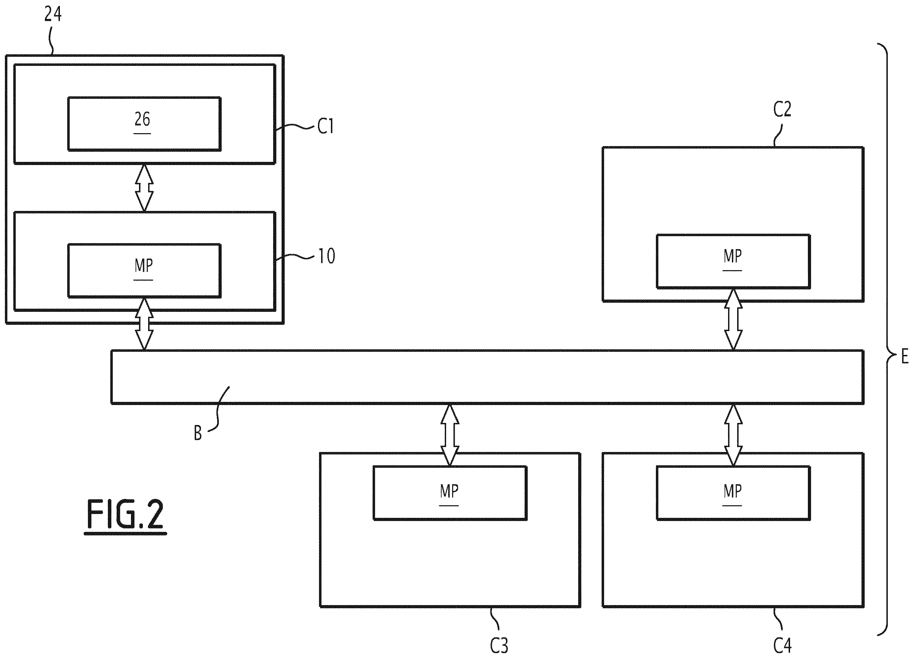

La figure 2 représente une autre variante d'architecture d'ensemble électronique E selon l'invention par rapport à celle illustrée par la figure 1. Selon cette deuxième variante, le dispositif électronique 10 de calcul et de diffusion centralisés d'état(s) d'un aéronef précédemment décrit est intégré dans un équipement électronique 24 comprenant en outre un des dispositifs avioniques consommateurs comme par exemple le dispositif avionique consommateur C1 correspondant à un système d'alerte de vol ou FWS (de l'anglais *Flight Warning System*), ou encore le dispositif avionique consommateur C2 correspondant à un système ou un ensemble de systèmes synoptiques.

Autrement dit, selon cette variante, le dispositif électronique 10 de calcul et de diffusion centralisés d'état(s) d'un aéronef et un dispositif avionique consommateur, par exemple C1, sont colocalisés au sein du même équipement avionique 24 dont le module protocolaire MP est alors mutualisé. Dans ce cas, le dispositif électronique 10 de calcul et de diffusion centralisés d'état(s) d'un aéronef communique directement, via une liaison directe interne à l'équipement avionique 24, avec le module fonctionnel 26 du dispositif avionique consommateur C1 propre à mettre en oeuvre la fonction d'alerte de vol. L'équipement électronique 24 communique avec les autres dispositifs avioniques consommateurs C2, C3 et C4 via un bus avionique B, notamment ARINC 664, ARINC 429, etc.

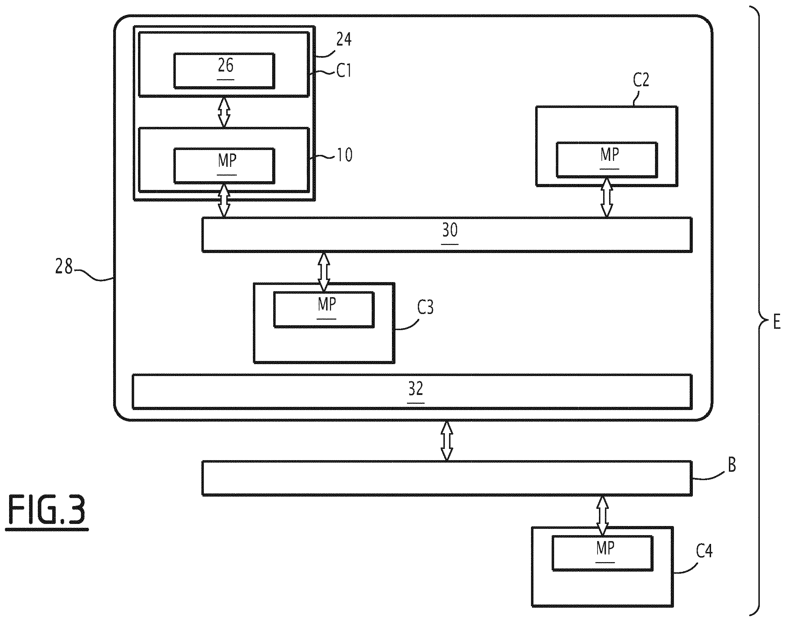

La figure 3 représente encore une autre variante d'architecture d'ensemble électronique E selon l'invention par rapport à celle illustrée par les figures 1 et 2. Selon cette troisième variante, de même que dans la deuxième variante, le dispositif électronique 10 de calcul et de diffusion centralisés d'état(s) d'un aéronef et un dispositif avionique consommateur, par exemple C1, sont colocalisés au sein du même équipement avionique 24. L'équipement avionique 24 et les dispositifs avioniques consommateurs C2, C3 au sein d'une même entité électronique 28, par exemple un super calculateur avionique, tandis que le dispositif avionique consommateur C4 est en dehors (i.e. à l'extérieur du boitier de l'entité électronique 28). Au sein de l'entité électronique 28, L'équipement avionique 24 et les dispositifs avioniques consommateurs C2, C3 communiquent via un port RAM 30 interne, et l'entité électronique 28 comprend en outre un gestionnaire d'interface 32 pour communiquer avec le dispositif avionique consommateur C4 externe en gérant l'accès physique au bus avionique B, notamment ARINC 664, ARINC 429, etc.

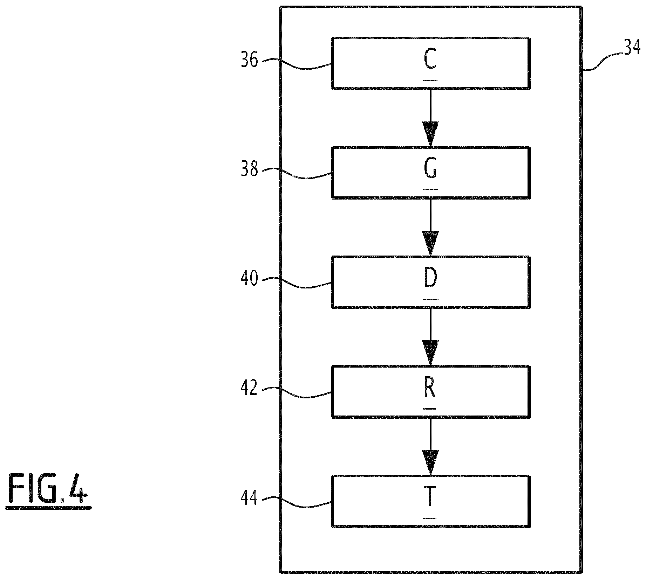

Le fonctionnement du dispositif électronique 10 de calcul et de diffusion centralisés d'état(s) d'un aéronef va désormais être expliqué à l'aide de la figure 4 représentant un organigramme d'un procédé 34 de calcul et de diffusion centralisés d'état(s) d'un aéronef.

Lors d'une étape 36, le module de calcul 12 du dispositif électronique 10 calcule C la valeur d'un ou plusieurs état(s) d'aéronef distincts. Lors d'une étape 38, le module de génération 14 du dispositif électronique 10 génère G une liste d'état(s) d'aéronef dont la valeur est propre à être accessible via le dispositif électronique de calcul et de diffusion centralisés, la liste comprenant, pour chaque état(s) d'aéronef, au moins une information représentative dudit état d'aéronef.

Selon l'exemple de la figure 4, les étapes de calcul 36 et de génération 38 se succèdent. Alternativement, ces deux étapes sont mises en oeuvre en parallèle, ou encore l'étape de calcul 36 succède à l'étape de génération 38. De plus, l'étape de calcul 36 est une étape de calcul permanent tant que la configuration courante de calcul est pendante.

Une fois la liste d'état(s) d'aéronef générée, lors d'une étape 40, le module d'émission/réception 16 du dispositif électronique 10 de calcul et de diffusion centralisés d'état(s) d'un aéronef diffuse D la liste à chaque dispositif avionique consommateur d'au moins une valeur d'au moins un état dudit aéronef, un dispositif avionique consommateur étant relié au dispositif électronique de calcul et de diffusion centralisés via un réseau avionique et/ou via une liaison directe.

Puis, lors d'une étape 42, le module d'émission/réception 16 du dispositif électronique 10 de calcul et de diffusion centralisés d'état(s) d'un aéronef reçoit R au moins une requête de transmission d'une ou plusieurs valeurs d'au moins un premier état d'aéronef sélectionné au sein de la liste, la requête étant émise par au moins un dispositif avionique consommateur relié au dispositif électronique de calcul et de diffusion centralisés via le réseau avionique et/ou via une liaison directe, la requête comprenant ladite au moins une information représentative associée audit au moins un premier état d'aéronef sélectionné.

Selon un aspect complémentaire facultatif, en cas de réception d'une requête de transmission d'une ou plusieurs valeurs d'au moins un deuxième état d'aéronef sélectionné au sein de la liste, la requête étant émise par ledit au moins un dispositif avionique consommateur, ledit au moins un deuxième état d'aéronef sélectionné au sein de la liste étant distinct dudit au moins un premier état d'aéronef sélectionné au sein de la liste, la transmission, audit au moins un dispositif avionique consommateur, uniquement de la valeur ou des valeurs dudit au moins un premier état d'aéronef sélectionné est automatiquement interrompue et remplacée par la transmission, audit au moins un dispositif avionique consommateur, uniquement de la valeur ou des valeurs dudit au moins un deuxième état d'aéronef sélectionné.

Autrement dit, une telle requête d'abonnement à la valeur ou les valeurs dudit au moins un deuxième état d'aéronef sélectionné, vaut désabonnement automatique de la valeur ou des valeurs dudit au moins un premier état d'aéronef sélectionné.

Lors d'une étape 44, le module d'émission/réception 16 du dispositif électronique 10 de calcul et de diffusion centralisés d'état(s) d'un aéronef transmet T, audit au moins un dispositif avionique consommateur, uniquement la valeur ou des valeurs dudit au moins un premier état d'aéronef sélectionné.

Selon un aspect complémentaire facultatif, en cas de réception R 42 d'au moins deux requêtes de transmission de la valeur ou des valeurs d'un même premier état d'aéronef, lesdites au moins deux requêtes étant émises respectivement par au moins deux dispositifs avioniques consommateurs distincts, la transmission T 44 comprend une mutualisation du transport de la valeur ou des valeurs du même premier état d'aéronef à destination desdits au moins deux dispositifs avioniques consommateurs distincts. Autrement dit, les valeurs de même(s) état(s) requis pas des consommateurs distincts sont mutualisées au niveau de la couche transport, pour optimiser la bande passante.

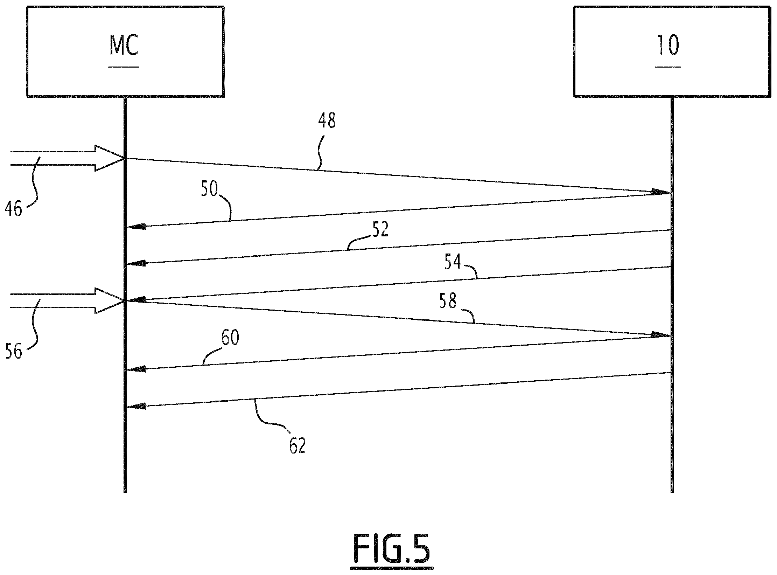

Sur la figure 5 est illustrée un exemple d'échanges, postérieurs à la diffusion de la liste d'états d'aéronef L = {[FUEL_PMP1 ; 1001]; [FUEL_PMP2 ; 1002]; [HYD_PMP1 ; 2001] ; [HYD_PMP2 ; 2002]}, entre un dispositif avionique consommateur MC et un dispositif électronique 10 de calcul et de diffusion centralisés d'état(s) d'un aéronef. Le dispositif avionique consommateur MC correspond par exemple à un système C2 ou un ensemble de systèmes synoptiques propres à afficher des schémas/pages synoptiques d'équipement(s) avionique(s) pour représenter par exemple les équipements avioniques dédiés au carburant, à la distribution électrique, hydraulique ou des capacités de l'aéronef en termes de trajectoires, approches, etc.

Le dispositif avionique consommateur MC procède à l'affichage (flèche 46) de la page liée au système fuel et requiert (flèche 48) auprès du dispositif électronique 10 un abonnement aux valeurs d'état de la première pompe à fuel de libellé FUEL_PMP1 et de la deuxième pompe à fuel de libellé FUEL_PMP2 en transmettant au sein de cette requête les identifiants {[1001] ; [1002]} précédemment publiés au sein de la liste L et associés respectivement aux libellés FUEL_PMP1 et FUEL_PMP2.

Le dispositif électronique 10 signifie (flèche 50) son accord pour cet abonnement en transmettant par exemple le message {OK [1001] ; OK [1002]} puis publie (flèche 52) les valeurs d'états courants des pompes à fuel par exemple avec le message {[1001] NO; [1002] NO} où NO signifie que le fonctionnement en cours de ces deux pompes à fuel est normal (de l'anglais *Normal Operation).*

A un instant ultérieur à la première publication 52, le dispositif électronique 10 publie (flèche 54) les nouvelle valeurs d'états associés par exemple avec le message {[1001] NO; [1002] F} où F indique une panne ou un fonctionnement anormal de la deuxième pompe à fuel.

Puis, le dispositif avionique consommateur MC procède à l'affichage (flèche 56) de la page liée au système hydraulique et souscrit alors (flèche 58) via une nouvelle requête aux valeurs d'état de la première pompe hydraulique de libellé HYD_PMP1 et de la deuxième pompe hydraulique de libellé HYD_PMP2 en transmettant au sein de cette requête les identifiants {[2001] ; [2002]} précédemment publiés au sein de la liste L et associés respectivement aux libellés HYD_PMP1 et HYD_PMP2. Une telle souscription (i.e. abonnement) aux valeurs d'état de pompes hydrauliques vaut désabonnement aux valeurs d'état de pompe à fuel, et le dispositif électronique 10 signifie (flèche 60) son accord pour cet abonnement en transmettant par exemple le message {OK [2001] ; OK [2002]} puis publie (flèche 62) les valeurs d'états courants des pompes hydrauliques par exemple avec le message {[2001] NO; [2002] NO} où NO signifie que le fonctionnement en cours de ces deux pompes hydraulique est normal (de l'anglais *Normal Operation*).

On conçoit ainsi que le dispositif électronique 10, l'ensemble électronique E et le procédé de calcul et de diffusion selon l'invention permettent d'optimiser l'interconnexion entre différents dispositifs avioniques en partageant une vision unique et consolidée de la situation de l'appareil pour aider de manière efficace l'opérateur de l'aéronef dans sa prise de décision, tout en opérant une transmission sur mesure du ou des états d'aéronef requis par un dispositif électronique consommateur de sorte à limiter la bande passante consommée en ajustant le volume de données nécessaires au strict besoin, et limiter le temps de calcul nécessaire en ne traitant que les données nécessaires à la fonction requise à l'instant courant.

## Revendications

1. Ensemble électronique (E) comprenant au moins deux équipements électroniques (10, C1, C2, C3, C4) reliés entre eux par un réseau avionique et/ou par une liaison directe, dans lequel au moins l'un des au moins deux équipements électroniques comporte un dispositif électronique (10) de calcul et de diffusion centralisés d'état(s) d'un aéronef, et au moins l'un des au moins deux équipements électroniques comporte au moins un dispositif avionique (C1, C2, C3, C4) consommateur d'au moins une valeur d'au moins un état dudit aéronef, le dispositif électronique (10) de calcul et de diffusion centralisés étant configuré pour au moins :
- calculer la valeur d'un ou plusieurs état(s) d'aéronef distincts,
**caractérisé en ce que** le dispositif électronique (10) de calcul et de diffusion centralisés est en outre configuré pour :
- générer une liste d'état(s) d'aéronef dont la valeur est propre à être accessible via le dispositif électronique de calcul et de diffusion centralisés, la liste comprenant, pour chaque état(s) d'aéronef, au moins une information représentative dudit état d'aéronef,
- diffuser la liste à chaque dispositif avionique (C1, C2, C3, C4) consommateur d'au moins une valeur d'au moins un état dudit aéronef,
- recevoir, d'au moins un dispositif avionique consommateur (C1, C2, C3, C4), au moins une requête de transmission d'une ou plusieurs valeurs d'au moins un premier état d'aéronef sélectionné au sein de la liste, la requête comprenant ladite au moins une information représentative associée audit au moins un premier état d'aéronef sélectionné,
- transmettre, audit au moins un dispositif avionique consommateur (C1, C2, C3, C4), uniquement la valeur ou les valeurs dudit au moins un état d'aéronef sélectionné.

2. Ensemble électronique (E) selon la revendication 1, dans lequel le dispositif électronique (10) de calcul et de diffusion centralisés est propre à diffuser la liste d'état(s) d'aéronef :
- au cours d'une phase d'initialisation du dispositif électronique de calcul et de diffusion centralisés, et/ou
- au cours d'une phase d'initialisation d'au moins un des dispositifs avioniques consommateurs (C1, C2, C3, C4) relié(s) au dispositif électronique (10) de calcul et de diffusion centralisés via le réseau avionique et/ou via une liaison directe, et/ou
- sur requête d'au moins un des dispositifs avioniques consommateurs (C1, C2, C3, C4) relié(s) au dispositif électronique (10) de calcul et de diffusion centralisés via le réseau avionique et/ou via une liaison directe, et/ou
- via un fichier de configuration accessible par chaque dispositif avionique consommateur (C1, C2, C3, C4), et/ou
- en cas de changement de valeur d'au moins un état de ladite liste d'états(s), et/ou
- périodiquement.

3. Ensemble électronique (E) selon la revendication 1 ou selon la revendication 2, dans lequel la liste est configurable en nombre d'état(s) d'aéronef, et/ou en type d'état(s) de l'aéronef et/ou en information(s) représentative(s) dudit état d'aéronef.

4. Ensemble électronique (E) selon la revendication 3, dans lequel la liste comprend, pour chaque état(s) d'aéronef :
- un libellé invariant prédéterminé dudit état d'aéronef, le libellé étant connu de chaque dispositif avionique consommateur propre à consommer ledit état, et/ou
- un identifiant dudit état d'aéronef variable d'une configuration courante à une configuration suivante de la liste.

5. Ensemble électronique (E) selon l'une quelconque des revendications précédentes, dans lequel le dispositif électronique (10) de calcul et de diffusion centralisés est configuré pour transmettre audit au moins un dispositif avionique consommateur (C1, C2, C3, C4), uniquement la valeur ou les valeurs dudit au moins un état d'aéronef sélectionné, périodiquement et/ou en cas de changement de la ou des valeurs dudit au moins un état d'aéronef sélectionné.

6. Ensemble électronique (E) selon l'une quelconque des revendications 1 à 5, le dispositif électronique (10) de calcul et de diffusion centralisés et ledit au moins un dispositif avionique consommateur (C1, C2, C3, C4) communiquant l'un avec l'autre au moyen d'un protocole de communication selon lequel :
- le dispositif électronique (10) de calcul et de diffusion centralisés utilise un motif de publication pour :
- diffuser la liste d'état(s) d'aéronef dont la valeur est propre à être accessible via le dispositif électronique (10) de calcul et de diffusion centralisés, et
- transmettre, audit au moins un dispositif avionique consommateur (C1, C2, C3, C4), uniquement la valeur ou les valeurs dudit au moins un état d'aéronef sélectionné, et
- ledit au moins un dispositif avionique consommateur (C1, C2, C3, C4) utilise un motif d'abonnement pour requérir du dispositif électronique (10) de calcul et de diffusion centralisés la transmission d'une ou plusieurs valeurs d'au moins un premier état d'aéronef sélectionné au sein de la liste.

7. Procédé (34) de calcul et de diffusion centralisés d'état(s) d'un aéronef, le procédé (34) de calcul et de diffusion centralisés étant mis en oeuvre par un dispositif électronique (10) de calcul et de diffusion centralisés d'état(s) d'un aéronef, le procédé de calcul (34) et de diffusion centralisés d'état(s) d'un aéronef comprenant le calcul (36) de la valeur d'un ou plusieurs état(s) d'aéronef distincts,
**caractérisé en ce que** le procédé comprend en outre les étapes suivantes :
- la génération (38) d'une liste d'état(s) d'aéronef dont la valeur est propre à être accessible via le dispositif électronique de calcul et de diffusion centralisés, la liste comprenant, pour chaque état(s) d'aéronef, au moins une information représentative dudit état d'aéronef,
- la diffusion (40) de la liste à chaque dispositif avionique (C1, C2, C3, C4) consommateur d'au moins une valeur d'au moins un état dudit aéronef, un dispositif avionique consommateur (C1, C2, C3, C4) étant relié au dispositif électronique de calcul et de diffusion centralisés via un réseau avionique et/ou via une liaison directe,
- la réception (42) d'au moins une requête de transmission d'une ou plusieurs valeurs d'au moins un premier état d'aéronef sélectionné au sein de la liste, la requête étant émise par au moins un dispositif avionique consommateur (C1, C2, C3, C4) relié au dispositif électronique de calcul et de diffusion centralisés via le réseau avionique et/ou via une liaison directe, la requête comprenant ladite au moins une information représentative associée audit au moins un premier état d'aéronef sélectionné,
- la transmission (44), audit au moins un dispositif avionique consommateur (C1, C2, C3, C4), uniquement de la valeur ou des valeurs dudit au moins un premier état d'aéronef sélectionné.

8. Procédé (34) selon la revendication 7, dans lequel, en cas de réception (42) d'une requête de transmission d'une ou plusieurs valeurs d'au moins un deuxième état d'aéronef sélectionné au sein de la liste, la requête étant émise par ledit au moins un dispositif avionique consommateur, ledit au moins un deuxième état d'aéronef sélectionné au sein de la liste étant distinct dudit au moins un premier état d'aéronef sélectionné au sein de la liste, la transmission (44), audit au moins un dispositif avionique consommateur (C1, C2, C3, C4), uniquement de la valeur ou des valeurs dudit au moins un premier état d'aéronef sélectionné est automatiquement interrompue et remplacée par la transmission, audit au moins un dispositif avionique consommateur (C1, C2, C3, C4), uniquement de la valeur ou des valeurs dudit au moins un deuxième état d'aéronef sélectionné.

9. Procédé (34) selon la revendication 7 ou selon la revendication 8, dans lequel en cas de réception d'au moins deux requêtes de transmission de la valeur ou des valeurs d'un même premier état d'aéronef, lesdites au moins deux requêtes étant émises respectivement par au moins deux dispositifs avioniques consommateurs distincts (C1, C2, C3, C4), la transmission comprend une mutualisation du transport de la valeur ou des valeurs du même premier état d'aéronef à destination desdits au moins deux dispositifs avioniques consommateurs distincts (C1, C2, C3, C4).

10. Programme **caractérisé en ce qu'**il comporte des instructions logicielles qui lorsqu'elles sont exécutées par un ordinateur, mettent en oeuvre un procédé (34) de calcul et de diffusion centralisés d'état(s) d'un aéronef selon l'une quelconque des revendications 7 à 9.

## Patentansprüche

1. Elektronische Anordnung (E), umfassend mindestens zwei elektronische Geräten (10, C1, C2, C3, C4), die untereinander durch ein Avioniknetz und/oder durch eine direkte Verbindung verbunden sind, wobei mindestens eines der mindestens zwei elektronischen Geräte eine elektronische Vorrichtung (10) zur zentralen Berechnung und Verbreitung des/der Zustände eines Luftfahrzeugs umfasst, und mindestens eines der mindestens zwei elektronischen Geräte mindestens eine Avionikvorrichtung (C1, C2, C3, C4) umfasst, die mindestens einen Wert von mindestens einem Zustand des Luftfahrzeugs aufnimmt, wobei die elektronische Vorrichtung (10) zur zentralen Berechnung und Verbreitung mindestens zu Folgendem konfiguriert ist:
- Berechnen des Werts eines oder mehrerer separater Luftfahrzeugzustände, **dadurch gekennzeichnet, dass** die elektronische Vorrichtung (10) zur zentralen Berechnung und Verbreitung ferner zu Folgendem konfiguriert ist:
- Erzeugen einer Liste von Luftfahrzeugzuständen, deren Wert geeignet ist, über die elektronische Vorrichtung zur zentralen Berechnung und Verbreitung zugänglich zu sein, die Liste umfassend für jeden Luftfahrzeugzustand mindestens Informationen, die für den Luftfahrzeugzustand repräsentativ sind,
- Verbreiten der Liste an jede Avionikvorrichtung (C1, C2, C3, C4), die mindestens einen Wert von mindestens einem Zustand des Luftfahrzeugs aufnimmt,
- Empfangen, von mindestens einer aufnehmenden Avionikvorrichtung (C1, C2, C3, C4) mindestens einer Anforderung zur Übertragung eines oder mehrerer Werte von mindestens einem ersten aus der Liste ausgewählten Flugzeugzustand, die Anforderung umfassend die mindestens eine repräsentative Information, die mit dem mindestens einen ersten ausgewählten Flugzeugzustand assoziiert ist,
- Übertragen, an die mindestens eine aufnehmende Avionikvorrichtung (C1, C2, C3, C4) nur den Wert oder die Werte des mindestens einen ausgewählten Flugzeugzustands.

2. Elektronische Anordnung (E) nach Anspruch 1, wobei die elektronische Vorrichtung (10) zur zentralen Berechnung und Verbreitung geeignet ist, die Liste des/der Luftfahrzeugzustände wie folgt zu verbreiten:
- während einer Initialisierungsphase der elektronischen Vorrichtung zur zentralen Berechnung und Verbreitung und/oder
- während einer Initialisierungsphase mindestens einer der aufnehmenden Avionikvorrichtungen (C1, C2, C3, C4), die über das Avioniknetzwerk und/oder über eine direkte Verbindung mit der elektronischen Vorrichtung (10) zur zentralen Berechnung und Verbreitung verbunden ist, und/oder
- auf Anforderung von mindestens einer der aufnehmenden Avionikvorrichtungen (C1, C2, C3, C4), die über das Avioniknetzwerk und/oder über eine direkte Verbindung mit der elektronischen Vorrichtung (10) zur zentralen Berechnung und Verbreitung verbunden ist, und/oder
- über eine Konfigurationsdatei, auf die jede aufnehmende Avionikvorrichtung (C1, C2, C3, C4) zugreifen kann, und/oder
- bei einer Wertänderung mindestens eines Zustands aus der genannten Liste von Zuständen, und/oder
- periodisch.

3. Elektronische Anordnung (E) nach Anspruch 1 oder nach Anspruch 2, wobei die Liste als Anzahl von Flugzeugzuständen und/oder als Art von Flugzeugzuständen und/oder als Informationen, die für den Flugzeugzustand repräsentativ ist/sind, konfigurierbar ist.

4. Elektronische Anordnung (E) nach Anspruch 3, wobei die Liste für jeden Luftfahrzeugzustand Folgendes umfasst:
- eine vorbestimmte unveränderliche Beschriftung von jedem Flugzeugzustand, wobei die Beschriftung jeder aufnehmenden Avionikvorrichtung bekannt ist, die in der Lage ist, den/die Zustände aufzunehmen, und/oder
- eine Kennung des genannten Luftfahrzeugzustands, die von einer aktuellen Konfiguration zu einer nächsten Konfiguration der Liste variiert.

5. Elektronische Anordnung (E) nach einem der vorherigen Ansprüche, wobei die elektronische Vorrichtung (10) zur zentralen Berechnung und Verbreitung konfiguriert ist, um an die mindestens eine aufnehmende Avionikvorrichtung (C1, C2, C3, C4) nur den Wert oder die Werte des mindestens einen ausgewählten Flugzeugzustands periodisch und/oder im Fall einer Änderung des Werts oder der Werte des mindestens einen ausgewählten Flugzeugzustands überträgt.

6. Elektronische Anordnung (E) nach einem der Ansprüche 1 bis 5, wobei die elektronische Vorrichtung (10) zur zentralen Berechnung und Verbreitung und die mindestens eine aufnehmende Avionikvorrichtung (C1, C2, C3, C4) mittels eines Kommunikationsprotokolls miteinander kommunizieren, gemäß dem:
- die elektronische Vorrichtung (10) zur zentralen Berechnung und Verbreitung ein Veröffentlichungsmuster für Folgendes verwendet:
- Verbreiten der Liste von Luftfahrzeugzuständen, deren Wert geeignet ist, über die elektronische Vorrichtung (10) zur zentralen Berechnung und Verbreitung zugänglich zu sein, und
- Übertragen, an die mindestens eine aufnehmende Avionikvorrichtung (C1, C2, C3, C4) nur den Wert oder die Werte des mindestens einen ausgewählten Flugzeugzustands, und
- wobei die mindestens eine aufnehmende Avionikvorrichtung (C1, C2, C3, C4) ein Abonnementmuster verwendet, um von der elektronischen Vorrichtung (10) zur zentralen Berechnung und Verbreitung die Übertragung eines oder mehrerer Werte von mindestens einem ersten Flugzeugzustand, der aus der Liste ausgewählt ist, anzufordern.

7. Verfahren (34) zur zentralen Berechnung und Verbreitung von Flugzeugzuständen, wobei das Verfahren (34) zur zentralen Berechnung und Verbreitung durch eine elektronische Vorrichtung (10) zur zentralen Berechnung und Verbreitung von Flugzeugzuständen implementiert ist, wobei das Verfahren zur zentralen Berechnung (34) und Verbreitung von Flugzeugzuständen ein Berechnen (36) des Werts von einem oder mehreren unterschiedlichen Flugzeugzuständen umfasst, **dadurch gekennzeichnet, dass** das Verfahren ferner die folgenden Schritte umfasst:
- Erzeugen (38) einer Liste von Luftfahrzeugzuständen, deren Wert geeignet ist, über die elektronische Vorrichtung zur zentralen Berechnung und Verbreitung zugänglich zu sein, die Liste umfassend für jeden Luftfahrzeugzustand mindestens Informationen, die für den Luftfahrzeugzustand repräsentativ sind,
- Verteilen (40) der Liste an jede Avionikvorrichtung (C1, C2, C3, C4), die mindestens einen Wert von mindestens einem Zustand des Luftfahrzeugs aufnimmt, wobei eine aufnehmende Avionikvorrichtung (C1, C2, C3, C4) über ein Avioniknetzwerk und/oder über eine direkte Verbindung mit der elektronischen Vorrichtung zur zentralen Berechnung und Verbreitung verbunden ist,
- Empfangen (42) mindestens einer Anforderung zur Übertragung eines oder mehrerer Werte mindestens eines ersten aus der Liste ausgewählten Flugzeugzustands, wobei die Anforderung von mindestens einer aufnehmenden Avionikvorrichtung (C1, C2, C3, C4) gesendet wird, die mit der elektronischen Vorrichtung zur zentralen Berechnung und Verbreitung über das Avioniknetzwerk und/oder über eine direkte Verbindung verbunden ist, die Anforderung umfassend die mindestens eine repräsentative Information, die mit dem mindestens einen ersten ausgewählten Flugzeugzustand assoziiert ist,
- Übertragen (44), an die mindestens eine aufnehmende Avionikvorrichtung (C1, C2, C3, C4), nur des Werts oder der Werte des mindestens einen ersten ausgewählten Flugzeugzustands.

8. Verfahren (34) nach Anspruch 7, wobei im Fall eines Empfangens (42) einer Anforderung zur Übertragung eines oder mehrerer Werte von mindestens einem zweiten ausgewählten Flugzeugzustand innerhalb der Liste, wobei die Anforderung von der mindestens einen aufnehmenden Avionikvorrichtung ausgegeben wird, die mindestens eine zweite ausgewählte Flugzeugzustand innerhalb der Liste von dem mindestens einen ersten ausgewählten Flugzeugzustand innerhalb der Liste verschieden ist, die Übertragung (44) nur des Werts oder der Werte des mindestens einen ersten ausgewählten Flugzeugzustands an die mindestens eine aufnehmende Avionikvorrichtung (C1, C2, C3, C4) automatisch unterbrochen und durch die Übertragung nur des Werts oder der Werte des mindestens einen zweiten ausgewählten Flugzeugzustands an die mindestens eine aufnehmende Avionikvorrichtung (C1, C2, C3, C4) ersetzt wird.

9. Verfahren (34) nach Anspruch 7 oder nach Anspruch 8, wobei im Fall eines Empfangens von mindestens zwei Anforderungen zur Übertragung des Werts oder der Werte desselben ersten Luftfahrzeugzustands, wobei die mindestens zwei Anfragen jeweils von mindestens zwei verschiedenen aufnehmenden Avionikvorrichtungen (C1, C2, C3, C4) gesendet werden, die Übertragung eine Zusammenlegung des Transports des Werts oder der Werte desselben ersten Luftfahrzeugzustands zu den mindestens zwei verschiedenen aufnehmenden Avionikvorrichtungen (C1, C2, C3, C4) umfasst.

10. Programm, **dadurch gekennzeichnet, dass** es Software-Anweisungen umfasst, die, wenn sie von einem Computer ausgeführt werden, ein Verfahren (34) zur zentralen Berechnung und Verbreitung des/der Zustände eines Luftfahrzeugs nach einem der Ansprüche 7 bis 9 implementieren.

## Claims

1. Electronic assembly (E) comprising at least two pieces of electronic equipment (10, C1, C2, C3, C4) connected together by an avionics network and/or by a direct link, **characterized in that** at least one of the at least two pieces of electronic equipment comprises an electronic device (10) for the centralized computation and diffusion of the state(s) of an aircraft, and at least one of the at least two pieces of electronic equipment comprises at least one consumer avionics device (C1, C2, C3, C4) of at least one value of at least one state of the said aircraft, the electronic device (10) for the centralized computation and diffusion being configured for at least :
- calculate the value of one or more distinct aircraft state(s),
**characterized in that** the electronic device (10) for the centralized computation and diffusion is further configured for:
- generate a list of aircraft state(s) whose value is suitable to be accessible via the electronic device for the centralized computation and diffusion, the list comprising, for each aircraft state(s), at least one representative item of information of the said aircraft state,
- diffuse the list to each consumer avionics device (C1, C2, C3, C4) of at least one value of at least one state of the said aircraft,
- receive, from at least one consumer avionics device (C1, C2, C3, C4), at least one request for transmission of one or more values of at least one first aircraft state selected from the list, the request comprising the said at least one representative information related to the said at least one first selected aircraft state,
- transmit, to the said at least one consumer avionics device (C1, C2, C3, C4), only the value or values of the said at least one selected aircraft state.

2. Electronic assembly (E) according to the claim 1, wherein the electronic device (10) for the centralized computation and diffusion is suitable for the diffusion of the list of aircraft state(s):
- during an initialization phase of the electronic device for the centralized computation and diffusion, and/or
- during an initialization phase of at least one of the consumer avionics devices (C1, C2, C3, C4) connected to the electronic device (10) for the centralized computation and diffusion via the avionics network and/or via a direct link, and/or
- on request of at least one of the consumer avionics devices (C1, C2, C3, C4) connected to the electronic device (10) for the centralized computation and diffusion via the avionics network and/or via a direct link, and/or
- via a configuration file accessible by each consumer avionics device (C1, C2, C3, C4), and/or
- in the event of a change in the value of at least one state in the said list of states, and/or
- periodically.

3. Electronic assembly (E) according to the claim 1 or according to the claim 2, wherein the list is configurable in number of aircraft state(s), and/or in type of aircraft state(s) and/or in information(s) showing the said aircraft state.

4. Electronic assembly (E) according to claim 3, wherein the list comprises, for each aircraft state(s) :
- a predetermined invariant label of the said aircraft state, the label being known to each consumer avionics device capable of consuming the said state, and/or
- an identifier of the said variable aircraft state from a current configuration to a next configuration in the list.

5. Electronic assembly (E) according to any one of the preceding claims, wherein the electronic device (10) for the centralized computation and diffusion is configured to transmit to the said at least one consumer avionics device (C1, C2, C3, C4), only the value or values of the said at least one selected aircraft state, periodically and/or in the event of a change in the value or values of the said at least one selected aircraft state.

6. Electronic assembly (E) according to any one of the claims 1 to 5, the electronic device (10) for the centralized computation and diffusion of the said at least one consumer avionics device (C1, C2, C3, C4) communicating with each other by means of a communication protocol according wherein :
- the electronic device (10) for the centralized computation and diffusion uses a publication pattern for :
- diffusing the list of aircraft state(s) the value of which is suitable to be accessible via the electronic device (10) for the centralized computation and diffusion, and
- transmit, to the said at least one consumer avionics device (C1, C2, C3, C4), only the value or values of the said at least one selected aircraft state, and
- the said at least one consumer avionics device (C1, C2, C3, C4) uses a subscription pattern to request from the electronic device (10) for the centralized computation and diffusion the transmission of one or more values of at least a first aircraft state selected from the list.

7. A method (34) for the centralized computation and diffusion of the state(s) of an aircraft, the method (34) for the centralized computation and diffusion being implemented by an electronic device (10) for the centralized computation and diffusion of the state(s) of an aircraft the method (34) for the centralized computation and diffusion of the state(s) of an aircraft comprising the following steps:
- the computation (36) of the value of one or more distinct aircraft state(s),
- the generation (38) of a list of aircraft state(s) the value of which is suitable for being accessible via the electronic device for the centralized computation and diffusion, the list comprising, for each aircraft state(s), of at least one item of information showing the said aircraft state,
- the diffusion (40) of the list to each consumer avionics device (C1, C2, C3, C4) of at least one value of at least one state of the said aircraft, a consumer avionics device (C1, C2, C3, C4) being connected to the electronic device for the centralized computation and diffusion via an avionics network and/or via a direct link,
- the reception (42) of at least one request for transmission of one or more values of at least one first aircraft state selected from the list, the request being sent by at least one consumer avionics device (C1, C2, C3, C4) connected to the electronic device for the centralized computation and diffusion via the avionics network and/or via a direct link, the request comprising the said at least one representative information related to the said at least one first selected aircraft state,
- the transmission (44), to the said at least one consumer avionics device (C1, C2, C3, C4), only the value or values of the said at least one first selected aircraft state.

8. The method (34) according to claim 7, wherein, upon receipt (42) of a request to transmit one or more values of at least one second aircraft state selected from the list, the request being issued by the said at least one consumer avionics device, to the said at least one second aircraft state selected from the list being distinct from said at least one first aircraft state selected from the list, the transmission (44), to the said at least one consumer avionics device (C1, C2, C3, C4), of only the value or values of the said at least one first selected aircraft state is automatically interrupted and replaced by the transmission, to the said at least one consumer avionics device (C1, C2, C3, C4), of only the value or values of the said at least one second selected aircraft state.

9. The method (34) according to the claim 7 or according to the claim 8, wherein in the event of reception of at least two requests for transmission of the value or values of a same first aircraft state, the said at least two requests being emitted respectively by at least two distinct consumer avionics devices (C1, C2, C3, C4), the transmission comprises a mutualization of the transport of the value or values of the same first aircraft state to the said at least two distinct consumer avionics devices (C1, C2, C3, C4).

10. A program comprising software instructions which, when executed by a computer, implement a method (34) for the centralized computation and diffusion of the state(s) of an aircraft according to any of claims 7 to 9.
